# EUROPÄISCHE PATENTSCHRIFT

(11) **EP 0 774 592 B1**
(45) Veröffentlichungstag und Bekanntmachung des Hinweises auf die Patenterteilung: **20.12.2000**
(21) Anmeldenummer: 96117243.4
(22) Anmeldetag: 28.10.1996
(51) Int. Cl.: F16C 29/06

(54) **Linearführung**
Linear bearing
Palier linéaire

(30) Priorität: 17.11.1995 DE 29518242 U
(43) Veröffentlichungstag der Anmeldung: 21.05.1997
(73) Patentinhaber: ISEL AUTOMATION HUGO ISERT, D-36132 Eiterfeld (DE)
(72) Erfinder: Scheich, Hubert, 36132 Eiterfeld (DE)
(74) Vertreter: Olbricht, Karl Heinrich, Dipl.-Phys.

(56) Entgegenhaltungen:
- EP-A- 0 080 515
- EP-A- 0 535 469
- CH-A- 347 049
- DE-A- 2 729 354
- DE-A- 4 106 620
- DE-B- 2 645 266
- DE-U- 9 212 754
- US-A- 4 128 279

## Beschreibung

Die Erfindung betrifft eine Linearführung gemäß dem Oberbegriff von Anspruch 1.

Derartige Führungen bzw. lineare Bewegungseinheiten dienen vielfältigen Zwekken, wobei allgemein eine Last auf einem Wagen oder Schlitten entlang einer geradlinigen Welle oder Wellengruppe bewegt wird. Man hat z. B. eine Schiene benutzt, deren Kopf beiderseits Stangenpaare trägt, denen gleichartige Stangenpaare eines übergreifenden Laufwagens gegenüberstehen; dieser ist auf einer Kugelreihe verschieblich. Hierfür ist der Fertigungs- und Montageaufwand zwar relativ groß, aber dennoch jedenfalls bei höherer Belastung nur bedingt Parallelität gegeben. Gemäß CH-A-347 049 werden die beiden Stangen jedes Paares in einer breiten Rechteck-Nut lediglich durch die Köpfe von in Seitenflanschen sitzenden Schrauben gehalten, und die Kugeln sind zwischen Endstücken gefesselt.

Andere Führungssysteme z. B. gemäß EP-B-0 080 515 und EP-B-0 535 469 bedienen sich zur Führung eines Laufwagens, der über Rollenpaare oder Linearkugellager abgestützt sein kann, jeweils zweier Wellen, die auf einer Anzahl Böcken beiderseits gehaltert sind, oder Klemmprofilen, welche die Wellen mit genauer Passung über die ganze Länge haltern, namentlich in linienförmiger Anlage gegeneinander verspannt. Wenigstens ein Antrieb bewegt einen Laufwagen, der mit vier Rollen oder Linearkugelreihen an den Wellen-Außenflächen anliegt.

Ein in DE-A-3 040 711 beschriebener Laufwagen hat ein einteiliges Gehäuse mit Nuten-Einzügen zur Befestigung von Rollenachsen und/oder von Lastkörpern. Die fliegend gelagerten Rollenachsen sind zwar kurz, doch können auftretende Lastmomente zu Biegungen oder Schwingungen führen, welche die Genauigkeit der Linearbewegung beeinträchtigen. In einem Schlitten eingelagerte Linearbuchsen etwa nach Art von EP-A-0 202 595 oder DE-U-7 340 694 bedingen großen Aufwand für Fertigung und Montage.

Eine in DE-B-26 45 266 offenbarte Linearführung hat Führungsschienenpaare, die mit einem Brücken-Träger verschraubt sein können, wobei in Käfigen oder Käfigschienen gelagerte Wälzkörper (Kugeln) zwischen Laufstäben geführt sind. Letztere sind gegen die Führungsschiene kraftschlüssig verspannt und haben einen reduzierten Durchmesser mit (ebenen oder gekrümmten) Laufbahnflächen, welche in die gehärteten Stäbe präzise eingearbeitet, nämlich in aufwendigem Fertigungsgang geschliffen werden müssen. Das verteuert nicht nur die Herstellung, sondern erfordert auch eine winkelgenaue Montage in einem Laufbahnbett sowie einer mit ihm abschnittsweise fluchtenden Aufnahme, damit die Kugeln überhaupt laufen. Dazu nötige Haltestücke können als Bolzen ausgebildet, in Aussparungen der Schiene eingesetzt und durch Querstifte gesichert sein, die in eine Rille am Bolzenumfang eingreifen. Eine andere Bauform sieht schmale Klammern vor, die mit Dreh- und Verschiebungsspiel an der Schiene befestigt sind. Für das akkurate Montieren und Halten der speziell geformten Führungsstäbe muß also ein unverhältnismäßig großer mechanischer Aufwand getrieben werden, wobei die Einstellung des für Leichtgängigkeit notwendigen Montagespiels nicht eben bequem und die Führungsgenauigkeit nicht sicher definiert ist.

Bei einer Führung gemäß DE-U-9212 754 umspannen Einzugskanäle eines aus Profil-Abschnitten mit Zahnstangen zusammengesetzten Teleskopkörpers ebenfalls Stäbe, allerdings mit nur knapp über den halben Umfang hinaus reichender Fassung; jeweils zwischen zwei Profil-Abschnitten sind Wälzkörper (Kugeln) in Anlage an Stabpaaren gehalten. Diese Stäbe sind zwar vollzylindrisch, sie müssen jedoch in die Kanäle axial eingeschoben werden; bei seitlichem Einpressen entstünde eine bleibende Verformung im Aluminiumprofil und die Stäbe würden wieder herausfallen (können). Damit die Stäbe aber beim Einschieben nicht abknicken, ist andererseits genügend Spiel in den Kanälen erforderlich, was im unbelasteten Teil der Führung Ausweichbewegungen mit entsprechenden Vibrationen und Geräuschen verursacht und außerdem das Eindringen von Schmutzpartikeln, Schmierfett u.dgl. zuläßt. Die Auszugslänge der Teleskop-Anordnung begrenzt die erzielbare Tragfähigkeit auf einen engen Bereich.

Den beiden letztgenannten Konstruktionen ist gemeinsam, daß zwischen sich gegenüberstehenden Führungsstab-Paaren jeweils nur eine gekettete Kugelreihe angeordnet ist und daß ein Schlitten (Brücken-Träger) entlang blockförmigen Schienen gleitet. Um daran minimales Laufspiel einzustellen, muß man den Abstand zwischen den Kugelreihen der beiden Einzelführungen oder die gesamte Führungsbreite verändern können. Dies ist höchstens durch Ausrichten von Komponenten möglich, was schwierig zu bewerkstelligen ist und immer Ungenauigkeiten nach sich zieht, so daß eine zufriedenstellende Vorspannung kaum erreichbar ist.

Man erkennt, daß herkömmlich teure Bearbeitungsgänge mit engen Toleranzen unumgänglich sind; dazu kommen hohe Anforderungen an die Präzision der Montage. Es besteht mithin ein Bedürfnis nach Weiterentwicklungen. Ein wichtiges Ziel der Erfindung ist es, eine Linearführung von einfachem Aufbau und mäßigem Gewicht weiter so zu verbessern, daß trotz kostengünstiger Herstellung hohe Laufgenauigkeit und geringe Reibung gewährleistet ist.

Hauptmerkmale der Erfindung sind in Anspruch 1 angegeben. Ausgestaltungen sind Gegenstand der Ansprüche 2 bis 13.

Bei einer Linearführung mit Kugeln, die innerhalb eines als Buchse, Schlitten, Laufwagen o. dgl. ausgebildeten Trägers umlaufend entlang Stangen geführt sind, die in im wesentlichen ortsfesten Längskanälen eines Grundkörpers des Trägers parallel zur Achsrichtung der Linearführung sitzen, und mit auf oder an dem Träger vorhandenen Aufnahmen zur Befestigung eines linear zu bewegenden Körpers bzw. einer Last, sieht die Erfindung gemäß dem kennzeichnenden Teil von Anspruch 1 vor, daß der Träger eine Verbundeinheit aus einem Leichtmetall-Grundkörper mit zumindest einer eine Welle aufnehmenden Längshöhlung und aus Stahlstangen-Paaren ist, die in zur Welle hin offenen Längskanälen paßgenau gefaßt sind, indem im Inneren der Grundkörpers in einem Winkel zueinander zwei Stangenpaare angeordnet sind, an denen je eine Reihe von Kugeln anliegen, die sich an der Welle abstützen, und daß die Stangenpaare beiderseits eines Schlitzes angeordnet sind, dessen Spaltbreite mittels einer quer in den Grundkörper reichenden Stellschraube veränderbar ist.

Eine solche Linearführung ergänzt die herkömmlich dem Schienen- bzw. Wellenkörper gewidmete Aufmerksamkeit durch einen neuartigen Träger, der sich in überaus einfacher und kostengünstiger Weise herstellen läßt. Obwohl der fertigungstechnische Aufwand dank Einsparung von Stahl bzw. Sphäroguß und entsprechend einfacher Materialbearbeitung gering ist, treten keinerlei Einbußen an Exaktheit und Leichtläufigkeit der Bewegungsführung auf. In den Längskanälen sitzen die Stahlstangen-Paare, an denen entlang die Kugeln in den Kugelkanälen umlaufen, und zwar unter Abstützung auf der Welle, die von der Längshöhlung umfaßt ist, zu der hin laut Anspruch 2 die Längskanäle offen sind. Dieser übersichtliche Aufbau kommt mit einem Minimum an Bauteilen aus; besondere Befestigungselemente sind nicht erforderlich. Der formstabile Träger-Verbundkörper ist außerordentlich leicht. Im Bedarfsfalle kann man entlang der Linearführung oder an ausgewählten Stellen bequem Nachjustierungen vornehmen, um optimale Laufeigenschaften und Parallelität mit der bzw. jeder Welle zu sichern.

Gemäß Anspruch 3 sind die Stahlstangen des Trägers kreiszylindrische, maßhaltige Stahlstangen, so daß man handelsübliche Massenware zur Einpassung in die Längskanäle verwenden kann, was einen enormen Kostenvorteil bedeutet. Üblicher Silberstahl hat eine feingeläppte Oberfläche, die beste Laufeigenschaften für die geführten Umlaufkugeln bietet.

Laut Anspruch 4 sind zweckmäßig in den Außenbereichen des Grundkörpers Kugel-Rücklaufkanäle integriert. Der Grundkörper kann allgemein quader- oder 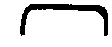 -förming sein, wobei an die Längshöhlung seitlich unter einem Radialwinkel zueinander wenigstens zwei achsparallele Kugelkanäle anschließen, welchen je zwei Längskanäle zugeordnet sind und welche umlaufend in die Außenbereiche des Grundkörpers zurückführen. Man erkennt, daß bei diesem offenen Kanalsystem die Längshöhlung, die Kugelkanäle sowie die Längskanäle jeweils radial miteinander verbunden sind und mit ihren Wandungen die erforderlichen Halte- und Führungsfunktionen gewährleisten.

Nach Anspruch 5 liegen die Achsen benachbarter Längskanäle jeweils in einer Ebene, die senkrecht zu derjenigen Radialrichtung verläuft, in der die Kugeln die zugeordnete Welle tangieren. Dank dieser Geometrie ist eine optimale Führungs-Abstützung bei geringstmöglicher Reibung sichergestellt.

Im Einklang mit Anspruch 6 sind insbesondere nahe dem Grundkörper-Außenbereich in regelmäßigen Längsabständen Stellschrauben angeordnet, die quer zu dem Schlitz Bohrungen an der Grundkörper-Unterseite durchsetzen und in gegenüberliegende Gewinde-Sacklöcher eingreifen, so daß die werksseitig vorgenommene Einstellung im Bedarfsfalle nachjustiert werden kann.

Wichtig ist die Maßnahme von Anspruch 7, wonach die Kugelkanäle derart gestaltet sind, daß sie die Kugeln unverlierbar halten, die in geschlossener Bahn äußerst reibungsarm laufen.

Anspruch 8 sieht vor, daß der Grundkörper in Höhe jedes Kugelkanals zum Einbringen einer Kugelfolge eine verschließbare Öffnung aufweist, der ein Schraubverschluß, eine Abdeckkappe o. dgl. zugeordnet ist. Vorteilhaft schießt man die Kugeln mittels Druckluft ein. Nach Aufbringen des Verschlusses sind sie gesichert, doch ist - etwa zu Schmier- und Reinigungszwecken - ein rascher Kugelwechsel jederzeit möglich.

In Anspruch 9 ist ferner vorgesehen, daß der Grundkörper unter nachbearbeitungsfreier Ausbildung der Kugel- und Längskanäle in Ziehtechnik hergestellt ist, wie an sich aus DE-U-9 212 754 bekannt. Dort ist jedoch ein Teleskop für Industrie-Roboter beschrieben, das Teleskop-Profilkörper aus einer Aluminiumlegierung mit darin parallel gehalterten Stahlstangen sowie in Streifenkäfigen auf Abstand gefaßte Kugeln verwendet.

Eine wichtige Weiterbildung der Erfindung besteht gemäß Anspruch 10 in einer Linearführungs-Anordnung mit einer insbesondere als einstückiges Hohlprofil ausgebildeten Brücke, die an ihren Außenteilen je eine Führungseinheit nach einem der Ansprüche 1 bis 9 aufweist. Dies ist namentlich für größere Linearvorschübe vorteilhaft, wobei die Brücke laut Anspruch 11 eine achsparallele Kammer haben kann, namentlich zur Aufnahme einer Kugelgewindemutter. So lassen sich besonders präzise Antriebe für die Linearverschiebung auch größerer Lasten erzielen. Die Brücke kann ferner nach Anspruch 12 achsparallele Außenstege haben, insbesondere zur reißverschlußartigen Betätigung flexibler Abdichtstreifen, zu ergänzender Längsführung usw. Dadurch ist auch während der Bewegung ein guter Staubschutz gewährleistet.

Eine besonders vorteilhafte Kombination ist im unabhängigen Anspruch 13 angegeben. Eine Linearführung mit wenigstens einer Welle, auf der sich Kugeln abstützen, die innerhalb eines als Buchse, Schlitten, Laufwagen o.dgl. ausgebildeten Trägers umlaufend entlang Stangen geführt sind, die in im wesentlichen ortsfesten Längskanälen eines Grundkörpers des Trägers parallel zur Achsrichtung der Welle sitzen, mit auf oder an dem Träger vorgesehenen Aufnahmen zur Befestigung eines linear zu bewegenden Körpers bzw. einer Last, zeichnet sich hiernach durch folgende Merkmale aus:
a) der Träger ist eine Verbundeinheit aus einem Leichtmetall-Grundkörper mit zumindest einer die wenigstens eine Welle aufnehmenden Längshöhlung und aus Stahlstangen-Paaren, die in zur Welle hin offenen Längskanälen paßgenau gefaßt sind,
b) zwei Stangenpaare sind in Längskanalpaaren im Inneren des Grundkörpers beiderseits eines Schlitzes in einem Winkel zueinander angeordnet,
c) zwei Reihen von Kugeln liegen an den Stangenpaaren an und laufen in Kugelkanälen um, die innen im Grundkörper liegen und ebenso wie der Schlitz zu einer Längshöhlung des Grundkörpers hin offen sind, in der die wenigstens eine Welle an den Kugeln anliegt,
d) deren Laufspiel und Vorspannung ist durch Änderung der Spaltbreite des Schlitzes mittels Stellschrauben justierbar, die quer zu dem Schlitz in den Grundkörper reichen,
e) im Grundkörper sind Kugel-Rücklaufkanäle vorhanden, insbesondere im Außenbereich beiderseits des Schlitzes.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnung. Darin zeigen:
- Fig.1a: eine schematisierte Schnittansicht eines Grundkörpers einer Linearführungseinheit,
- Fig.1b: eine Schnittansicht ähnlich Fig. 1a mit an einer Welle laufenden Kugeln,
- Fig. 2a: eine schematisierte Schnittansicht eines anderen Grundkörpers,
- Fig. 2b: eine Schnittansicht ähnlich Fig. 2a mit auf einer gehalterten Welle laufenden Kugeln,
- Fig. 3a: eine schematisierte Schnittansicht eines weiteren Grundkörpers,
- Fig. 3b: eine Schnittansicht ähnlich Fig. 3a mit auf einem gehalterten Wellenpaar laufenden Kugeln,
- Fig. 4a: eine schematisierte Schnittansicht noch eines anderen Grundkörpers mit Kugeln, die auf Wellen entlang einer Schiene laufen,
- Fig. 4b: eine vergrößerte Teilansicht zu Fig. 4a,
- Fig. 5a: eine Schrägansicht einer Schiene mit einem Wellenpaar,
- Fig. 5b: eine teilweise weggebrochene Schrägansicht eines Laufwagens,
- Fig. 5c: eine teilweise weggebrochene Schrägansicht eines auf einer Schiene nach Fig. 5a montierten Laufwagens nach Fig. 5b,
- Fig. 6a: eine schematisierte Schnittansicht einer Brücke und
- Fig. 6b: eine Schnittansicht entsprechend Fig. 6a mit Kugeln, die auf einer Wellenhalterung nach Art von Fig. 2b laufen.

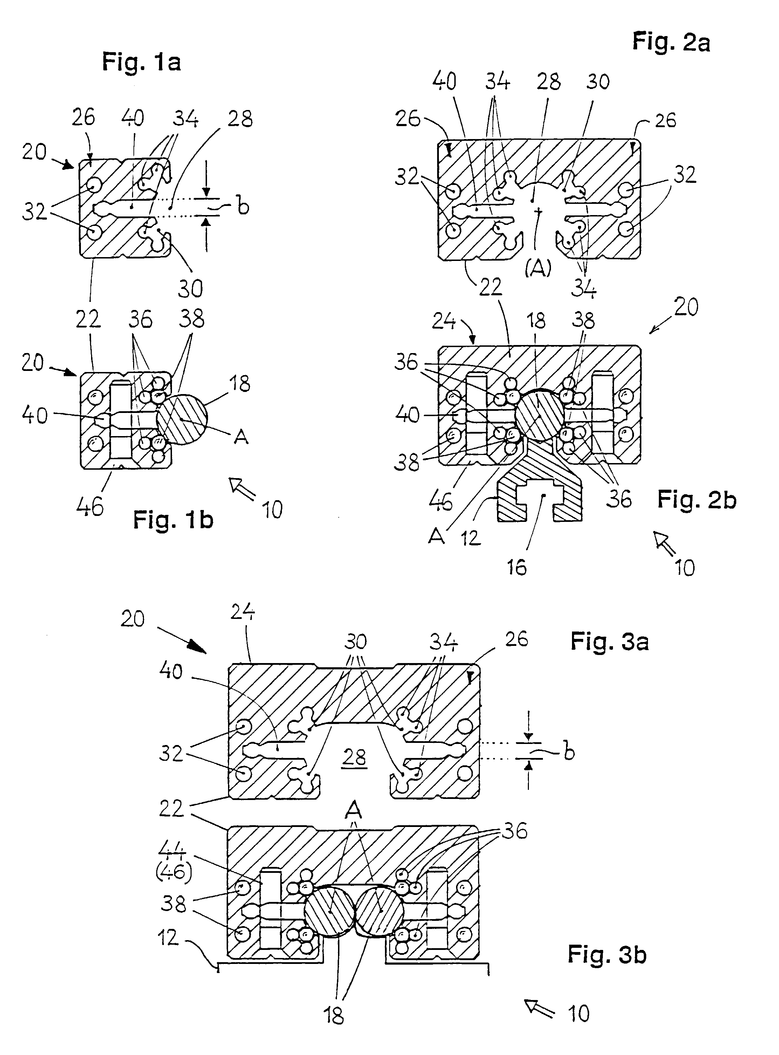

Man erkennt in Fig. 1a und 1b einen Träger 20, der zusammen mit einer Welle 18 eine Linearführung 10 bildet. Der Träger 20 hat einen Leichtmetall-Grundkörper 22 mit einer Längshöhlung 28 und einem von dieser ausgehenden Querschlitz 40. Im Außenbereich 26 des Grundkörpers 22 sind Rücklaufkanäle 32 für Kugeln 38 vorhanden, die sich führungsseitig an der Welle 18 abstützen und im Grundkörper 22 in Kugelkanälen 30 entlang parallelen Stahlstangen 36 laufen, welche in Längskanälen 34 gefaßt sind und parallel zu der Achsrichtung A der Welle 18 verlaufen. Stellschrauben 46 sind, wie in Fig. 1b schematisch angedeutet, entlang des Schlitzes 40 in gewissen Abständen vorgesehen, um die Spaltbreite b im Bedarfsfalle verändern zu können.

Im Beispiel von Fig. 2a und 2b übergreift der Träger 20 mit seinem Grundkörper 22 eine Welle 18, welche die Längshöhlung 28 im wesentlichen ausfüllt und auf einer Halterung 12 befestigt ist, die einen Bodeneinzug 16 zur (nicht dargestellten) stationären Montage hat. Insbesondere aus Fig. 2a ist ersichtlich, daß die Längskanäle 34 mit den Kugelkanälen 30 und diese mit der Längshöhlung 28 offen verbunden sind, wobei an letztere nach beiden Seiten Schlitze 40 zu den Außenbereichen 26 hin anschließen. Die Deckfläche 24 des Grundkörpers 22 kann mit (hier nicht gezeichneten) Aufnahmen versehen sein, um zu bewegende Körper daran festzulegen.

Prinzipiell gleichartigen Aufbau hat die Anordnung von Fig. 3a und 3b. Das Profil des Trägers 20 bzw. des Grundkörpers 22 ist dabei so gewählt, daß die Längshöhlung 28 ein Wellenpaar 18 aufnimmt, das auf einer schienenförmigen Halterung 12 durch (nicht dargestellte) schräge Schrauben zu linienförmiger Anlage aneinander verspannt ist, wie in EP-B-0 535 469 beschrieben. Auf den Wellen 18 laufen die Kugeln 38, die im Inneren des Grundkörpers 22 durch die in den Längskanälen 34 gefaßten Stahlstangen 36 abgestützt werden. Auch hierbei können Stellschrauben 46 in Gewinde-Sacklöchern 44 zum Nachstellen der Spaltbreite b der Schlitze 40 dienen.

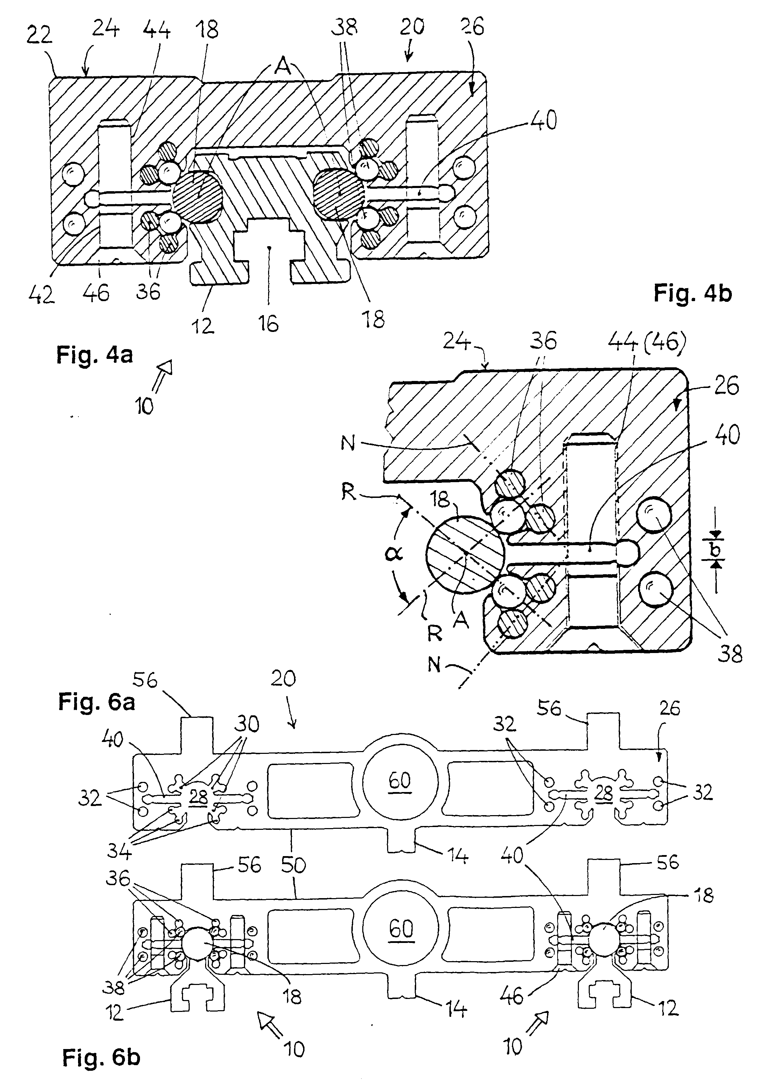

Ähnlich ist die Ausführungsform von Fig. 4a und 4b. Hierbei ist der Träger 12 eine breitere Schiene mit einem Nuteneinzug 16 zur stationären Befestigung. Die Stellschrauben 46 durchsetzen an der Unterseite des Grundkörpers 22 Querbohrungen 42 und greifen im Oberteil in Gewinde-Sacklöcher 44 ein. Zwischen den Radialrichtungen R ist durch die Berührungspunkte der Kugeln 38 an der Welle 18 ein Radialwinkel α definiert, der durch geeignete Bemessung sowohl der Wellenhalterung 12 als auch des Grundkörpers 22 in gewissen Grenzen gewählt werden kann, um optimale Führungseigenschaften zu gewährleisten. Die Normalen N zu den Radialrichtungen R definieren jeweils Ebenen, in denen die Stahlstangen 36 sich in den Längskanälen 34 befinden. Diese müssen jedoch nicht geklemmt oder stoffschlüssig verankert werden; vielmehr genügt zur lagerichtigen Festlegung die unverlierbare Einbringung in die Längskanäle 34.

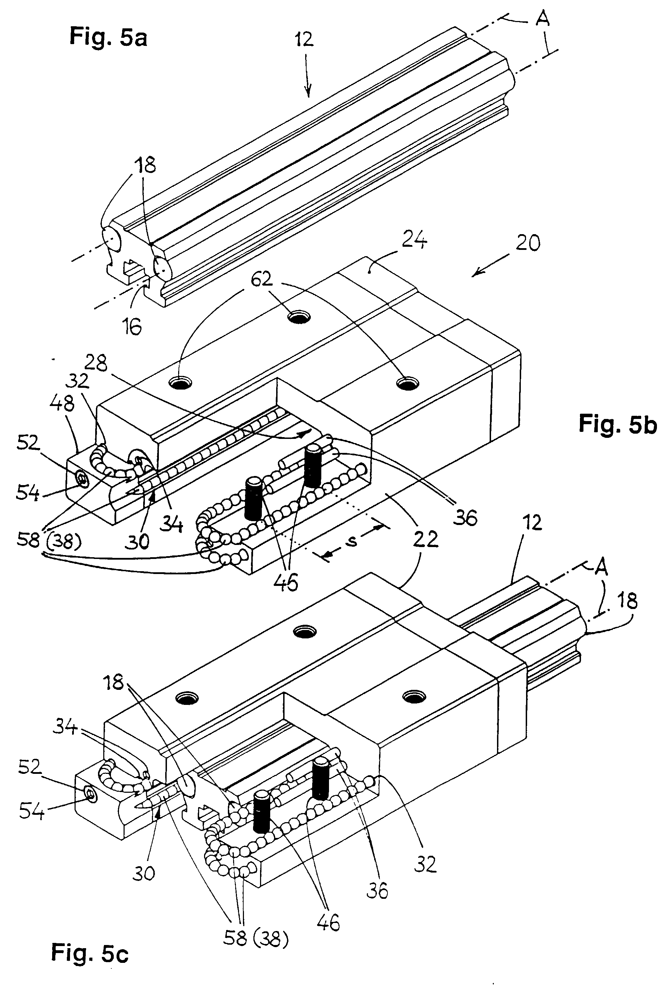

Aus der Schrägansicht von Fig. 5a geht eine schienenförmige Halterung 12 deutlicher hervor, die zur Aufnahme eines Trägers 20 (Fig. 5b) dient, dessen Grundkörper 22 zeichnerisch teilweise weggebrochen ist, um Einblick in das Innere zu ermöglichen. An der Deckfläche 24 vorhandene Schraublöcher 62 erlauben das Befestigen von (nicht dargestellten) Körpern, die mit dem Träger 20 bewegt werden sollen. Ferner erkennt man Kugelkanäle 30 zur Aufnahme von Kugelfolgen 58, die an Endstücken 48 umgelenkt werden. An diesen sind zum Einschießen der einzelnen Kugeln 38 achsparallele Öffnungen 52 vorgesehen, die mit einem Schraubverschluß 54, einem Pfropfen o. dgl. verschlossen werden können. In gewissen Längsabständen s sind außerdem Stellschrauben 46 quer zu den Laufbahnen der Kugelfolgen 58 angeordnet, um optimale Parallelität und Leichtgängigkeit der Linearführung 10 zu gewährleisten. Die montierte Einheit ist in Fig. 5c - ebenfalls teilweise weggebrochen - dargestellt.

Das Ausführungsbeispiel von Fig. 6a und 6b zeigt Führungsanordnungen nach Art von Fig. 2b an den Außenteilen einer Brücke 50, die in ihrem Mittelteil oder auch seitenversetzt eine Kammer 60 zur Aufnahme eines (nicht gezeichneten) Kugelgewindetriebs haben kann. Außerdem hat der brückenförmige Träger 20 oberhalb der Längshöhlungen 28 Außenstege 56, die zum Betätigen von (nicht dargestellten) flexiblen Abdeckungen dienen können. Eine zentrische Rippe 14 erlaubt eine zusätzliche Führung.

Hervorzuheben ist, daß für eine Linearführung 10 die Kugeln 38 der Kugelfolgen 58 nicht auf Abstand zueinander gehalten werden müssen, etwa mit herkömmlichen Lochstreifen. Vielmehr können sich die Kugeln 38 erfindungsgemäß durchaus berühren; reibungsarmer Lauf ist dennoch gewährleistet.

Die Erfindung ist nicht auf die beschriebenen Beispiele beschränkt; vielmehr sind zahlreiche Abwandlungen möglich. Man erkennt aber, daß bei einer Linearführung 10 mit entlang Stahlstangen 36 geführten Umlauf-Kugeln 38, die auf einer Welle 18 innerhalb eines Trägers 20 laufen, dieser eine neuartige Verbundeinheit aus einem Leichtmetall-Grundkörper 22 und aus Stahlstangen-Paaren 36 ist, die in zur Welle 18 hin offenen Längskanälen 34 paßgenau gefaßt sind. Der allgemein quader- oder 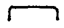 -förmige Grundkörper 22 hat eine Längshöhlung 28, an die seitlich unter einem Radialwinkel α zueinander wenigstens zwei achsparallele Kugelkanäle 30 anschließen, denen je zwei Längskanäle 34 zugeordnet sind. Deren Achsen liegen jeweils in einer Ebene senkrecht zu der Radialrichtung R, in der die Kugeln 38 die Welle 18 tangieren. Nahe dem Grundkörper-Außenbereich 26 sind in Längsabständen s Stellschrauben 46 angeordnet, um die Spaltbreite b eines zur Längshöhlung 28 hin offenen Schlitzes 40 zu justieren. Zum Einbringen einer Kugelfolge 58 hat der Grundkörper 22 in Höhe jedes Kugelkanals 30 eine verschließbare Öffnung 52 mit Schraubverschluß 54. Eine Hohlprofil-Brücke 50 kann außen je eine Führungseinheit 10 und z. B. zentrisch eine achsparallele Kammer 60 haben.

## Patentansprüche

1. Linearführung (10) mit Kugeln (38), die innerhalb eines als Buchse, Schlitten, Laufwagen o.dgl. ausgebildeten Trägers (20) umlaufend entlang Stangen (36) geführt sind, die in im wesentlichen ortsfesten Längskanälen (34) eines Grundkörpers (22) des Trägers (20) parallel zur Achsrichtung (A) der Linearführung (10) sitzen, und mit auf oder an dem Träger (20) vorgesehenen Aufnahmen (62) zur Befestigung eines linear zu bewegenden Körpers bzw. einer Last, dadurch **gekennzeichnet,** daß der Träger (20) eine Verbundeinheit aus einem Leichtmetall-Grundkörper (22) mit zumindest einer eine Welle (18) aufnehmenden Längshöhlung (28) und aus Stahlstangen-Paaren (36) ist, die in zur Welle (18) hin offenen Längskanälen (34) paßgenau gefaßt sind, indem im Inneren des Grundkörpers (22) in einem Winkel zueinander zwei Stangenpaare (36) angeordnet sind, an denen je eine Reihe von Kugeln (38) anliegen, die sich an der Welle (18) abstützen, und daß die Stangenpaare (36) beiderseits eines Schlitzes (40) angeordnet sind, dessen Spaltbreite (b) mittels einer quer in den Grundkörper (22) reichenden Stellschraube (46) veränderbar ist.

2. Linearführung nach Anspruch 1, dadurch **gekennzeichnet**, daß die Längskanäle (34) zur Längshöhlung (28) hin offen sind offen sind.

3. Linearführung nach Anspruch 1 oder 2, dadurch **gekennzeichnet,** daß die Stahlstangen (36) des Trägers (20) kreiszylindrische, maßhaltige Stahlstangen (36) sind.

4. Linearführung nach einem der Ansprüche 1 bis 3, dadurch **gekennzeichnet,** daß in den Außenbereich des Grundkörpers (22) Kugel-Rücklaufkanäle (32) integriert sind.

5. Linearführung nach einem der Ansprüche 1 bis 4, dadurch **gekennzeichnet**, daß die Achsen benachbarter Längskanäle (34) jeweils in einer Ebene (N) liegen, die senkrecht zu der Radialrichtung (R) verläuft, in der die Kugeln (38) die Welle (18) tangieren.

6. Linearführung nach einem der Ansprüche 1 bis 5, dadurch **gekennzeichnet,** daß insbesondere nahe dem Grundkörper-Außenbereich (26) in regelmäßigen Längsabständen (s) Stellschrauben (46) angeordnet sind, die quer zu dem Schlitz (40) Bohrungen (42) an der Grundkörper-Unterseite durchsetzen und in gegenüberliegende Gewinde-Sacklöcher (44) eingreifen.

7. Linearführung nach einem der Ansprüche 1 bis 6, dadurch **gekennzeichnet**, durch solche Gestaltung der Kugelkanäle (30), daß die Kugeln (38) unverlierbar gehalten sind.

8. Linearführung nach einem der Ansprüche 1 bis 7, dadurch **gekennzeichnet**, daß der Grundkörper (22) in Höhe jedes Kugelkanals (30) zum Einbringen einer Kugelfolge (58) eine verschließbare Öffnung (52) aufweist, der ein Schraubverschluß (54), eine Abdeckkappe o.dgl. zugeordnet ist.

9. Linearführung nach einem der Ansprüche 1 bis 8, dadurch **gekennzeichnet,** daß der Grundkörper (22) unter nachbearbeitungsfreier Ausbildung der Kugel- und Längskanäle (30; 34) in Ziehtechnik hergestellt ist.

10. Linearführungs-Anordnung mit einer insbesondere als einstückiges Hohlprofil ausgebildeten Brücke (50), die an ihren Außenteilen je eine Führungseinheit (10) nach einem der Ansprüche 1 bis 9 aufweist.

11. Linearführungs-Anordnung nach Anspruch 10, dadurch **gekennzeichnet**, daß die Brücke (50) zentrisch eine achsparallele Kammer (60) hat, namentlich zur Aufnahme einer Kugelgewindemutter.

12. Linearführungs-Anordnung nach Anspruch 10 oder 11, dadurch **gekennzeichnet**, daß die Brücke (50) achsparallele Außenstege (56) hat, insbesondere zur reißverschlußartigen Betätigung flexibler Abdichtstreifen oder zu ergänzender Längsführung.

13. Linearführung (10) mit wenigstens einer Welle (18), auf der sich Kugeln (38) abstützen, die innerhalb eines als Buchse, Schlitten, Laufwagen o.dgl. ausgebildeten Trägers (20) umlaufend entlang Stangen (36) geführt sind, die in im wesentlichen ortsfesten Längskanälen (34) eines Grundkörpers (22) des Trägers (20) parallel zur Achsrichtung (A) der Welle (18) sitzen, mit auf oder an dem Träger (20) vorgesehenen Aufnahmen (62) zur Befestigung eines linear zu bewegenden Körpers bzw. einer Last, **gekennzeichnet** durch die Kombination folgender Merkmale:
a) der Träger (20) ist eine Verbundeinheit aus einem Leichtmetall-Grundkörper (22) mit zumindest einer die wenigstens eine Welle (18) aufnehmenden Längshöhlung (28) und aus Stahlstangen-Paaren (36), die in zur Welle (18) hin offenen Längskanälen (34) paßgenau gefaßt sind,
b) zwei Stangenpaare (36) sind in Längskanalpaaren (34) im Inneren des Grundkörpers (22) beiderseits eines Schlitzes (40) in einem Winkel zueinander angeordnet,
c) zwei Reihen von Kugeln (38) liegen an den Stangenpaaren (36) an und laufen in Kugelkanälen (30) um, die innen im Grundkörper (22) liegen und ebenso wie der Schlitz (40) zu einer Längshöhlung (28) des Grundkörpers (22) hin offen sind, in der die wenigstens eine Welle (18) an den Kugeln (38) anliegt
d) deren Laufspiel und Vorspannung ist durch Änderung der Spaltbreite (b) des Schlitzes (40) mittels Stellschrauben (46) justierbar, die quer zu dem Schlitz (40) in den Grundkörper (22) reichen,
e) im Grundkörper (22) sind Kugel-Rücklaufkanäle (32) vorhanden, insbesondere im Außenbereich (26) beiderseits des Schlitzes (40).

## Claims

1. A linear motion system (10) comprising balls (38) which circulate within a support (20), e.g. a sleeve, a slide, a carriage or the like along rods (36) that are seated in substantially stationary longitudinal channels (34) of a support base (22) parallel to the axis (A) of the linear motion system (10), and further comprising sets (62) for attachment of a body or load to be moved in linear motion, wherein the support (20) is a compound unit made of a light-metal base having at least one longitudinal cavity (28) for receiving a shaft (18) and of pairs of steel rods (36) which are retained under exact fit in longitudinal channels (34) that open out towards the shaft (18), wherein inside the base (22) at an angle to one another, there are two pairs of steel rods (36) engaged by a series of balls (38) each which bear upon the shaft (18), and wherein the rod pairs (36) are arranged at either side of a slot (40) whose gap width (b) is modifiable by means of a set screw (46) reaching transversally into the base (22).

2. Linear motion system according to claim 1, wherein the longitudinal channels (34) open out towards the longitudinal cavity (28).

3. Linear motion system according to claim 1 or claim 2, wherein the steel rods (36) of the support (20) are dimensionally stable cylindrical steel rods of circular cross section.

4. Linear motion system according to any one of claims 1 to 3, wherein ball return channels (32) are integrated into outer zones of the base (22).

5. Linear motion system according to any one of claims 1 to 4, wherein the axes of neighbouring longitudinal channels (34) coincide with planes (N) that are perpendicular to radial directions (R) in which the balls (38) are tangent to the shaft(18).

6. Linear motion system according to any one of claims 1 to 5, wherein set screws (46) are arranged especially near the outer zones of the base (22) at regular longitudinal distances (s), which screws extend transversely to the slot (40) through bores (42) at the base bottom for engaging opposite tapped blind holes (44).

7. Linear motion system according to any one of claims 1 to 6, wherein the ball channels (30) are of such shape that the balls (38) are captively retained.

8. Linear motion system according to any one of claims 1 to 7, wherein the base (22) includes, at the point of each ball channel (30), an opening (32) for introducing a ball series (58) therein and wherein a screw plug (54), cap or the like is associated to the opening for closure thereof.

9. Linear motion system according to any one of claims 1 to 8, wherein the base (22) is made by deep-drawing work, the ball channels (30) and longitudinal channels (34) being formed free of secondary treatment.

10. A linear motion device having a bridge (50), in particular by way of an integral hollow profile, that includes at its outer portions guiding units (10) each according to any one of claims 1 to 9.

11. Linear motion device according to claim 10, wherein the bridge (50) centrally includes a chamber (60) parallel to an axis, especially for receiving a ball screw nut.

12. Linear motion device according to claim 10 or claim 11, wherein the bridge (50) comprises projections (56) that run parallel to an axis for zipwise operation of flexible sealing strips or for supplementary longitudinal guiding.

13. A linear motion system (10) comprising balls (38) which circulate within a support (20), e.g. a sleeve, a slide, a carriage or the like along rods (36) that are seated in substantially stationary longitudinal channels (34) of a support base (22) parallel to the axis (A) of the linear motion system (10), and further comprising sets (62) for attachment of a body or load to be moved in linear motion, characterized by the combination of the following features:
(a) the support (20) is a compound unit made of a light-metal base having at least one longitudinal cavity (28) for receiving at least one shaft(18), and of steel rod pairs (36) retained under exact fit in longitudinal channels (34) which open out towards the shaft (18),
(b) two pairs of steel rods (36) are arranged in pairs of longitudinal channels (34) inside the base (22) at an angle to each other on either side of a slot (40),
(c) two series of balls (38) engage the rod pairs (36) and circulate in ball channels (30) which are situated inside the base (22) and, like the slot (40), open out towards a longitudinal base cavity (28) where at least one shaft (18) is engaged by the balls (38),
(d) the running play and pretensioning of the balls (38) is adaptable by varying the gap width (b) of the slot (40) through set screws (46) that extend into the base (22) transversely to the slot (40),
(e) ball return channels (32) are provided in the base (22), especially in outer zones on either side of the slot (40).

## Revendications

1. Palier linéaire (10), avec des billes (38) circulant à l'intérieur d'un support (20) conçu en tant que douille, chariot, glissoir ou autres, et guidées le long de barres (36) lesquelles sont logées, parallèlement à la direction axiale (A) du palier linéaire (10), dans des canaux longitudinaux (34) essentiellement stationnaires d'un corps de base (22) du support (20), et avec des logements (62) prévus sur ou dans le support (20) pour fixer un corps ou une charge à déplacer linéairement, **caractérisé** en ce que le support (20) est une unité composite formée par un corps de base en métal léger (22) avec au moins un creux longitudinal (28) accueillant un arbre (18) et par des paires de barres d'acier (36), lesquelles sont logées avec un ajustement précis dans des canaux longitudinaux (34) ouverts en direction de l'arbre (18), en ayant disposé à l'intérieur du corps de base (22), de manière à former un angle entre elles, deux paires de barres (36) en contact avec une rangée respective de billes (38) qui s'appuient contre l'arbre (18), et en ce que les paires de barres (36) sont disposées de part et d'autre d'une fente (40), dont la largeur (b) peut être modifiée au moyen d'une vis de réglage (46) pénétrant transversalement dans le corps de base (22).

2. Palier linéaire selon la revendication 1, **caractérisé** en ce que les canaux longitudinaux (34) sont ouverts en direction du creux longitudinal (28).

3. Palier linéaire selon la revendication 1 ou 2, **caractérisé** en ce que les barres d'acier (36) du support (20) sont des barres d'acier cylindriques circulaires (36) ayant une stabilité dimensionnelle.

4. Palier linéaire selon l'une des revendications 1 à 3, **caractérisé** en ce que des canaux de course de retour des billes (34) sont intégrés dans les zones extérieures du corps de base (22).

5. Palier linéaire selon l'une des revendications 1 à 4, **caractérisé** en ce que les axes de canaux longitudinaux voisins (34) se trouvent respectivement dans un plan (N) qui est perpendiculaire à la direction radiale (R), dans laquelle les billes (38) sont tangentes à l'arbre (18).

6. Palier linéaire selon l'une des revendications 1 à 5, **caractérisé** en ce que notamment à proximité de la zone extérieure (26) du corps de base, des vis de réglage (46) disposées à des écarts longitudinaux réguliers (s) traversent, transversalement par rapport à la fente (40), des perforations (42) sur le côté inférieur du corps de base et pénètrent dans des trous borgnes filetés opposés (44).

7. Palier linéaire selon l'une des revendications 1 à 6, **caractérisé** par un tel agencement des canaux à billes (30) que les billes (38) sont retenues imperdables.

8. Palier linéaire selon l'une des revendications 1 à 7, **caractérisé** en ce que le corps de base (22), à la hauteur de chaque canal à billes (30), pour insérer une série de billes (58), dispose d'une ouverture (52) pouvant être obturée, à laquelle est associé un bouchon fileté (54), un capuchon ou autres.

9. Palier linéaire selon l'une des revendications 1 à 8, **caractérisé** en ce que le corps de base (22) est fabriqué par emboutissage, avec une formation des canaux à billes et des canaux longitudinaux (30; 34) sans finition ultérieure.

10. Arrangement de palier linéaire avec un pont (50) conçu notamment en tant que profilé creux monobloc, qui présente sur ses parties extérieures une unité de palier respective (10) conforme à l'une des revendications 1 à 9.

11. Arrangement de palier linéaire selon la revendication 10, **caractérisé** en ce qu'au centre, le pont (50) dispose d'une chambre (60) parallèle à l'axe, notamment pour recevoir un écrou d'une vis à billes.

12. Arrangement de palier linéaire selon la revendication 10 ou 11, **caractérisé** en ce que le pont (50) dispose de barrettes extérieures (56) parallèles à l'axe, notamment pour actionner, à la manière d'une fermeture éclair, des bandes flexibles d'étanchement, ou pour un guidage longitudinal complémentaire.

13. Palier linéaire (10) avec au moins un arbre (18), contre lequel s'appuient des billes (38) circulant à l'intérieur d'un support (20) conçu en tant que douille, chariot, glissoir ou autres et guidées le long de barres (36), lesquelles sont logées, parallèlement à la direction axiale (A) de l'arbre (18), dans des canaux longitudinaux (34) essentiellement stationnaires d'un corps de base (22) du support (20), avec des logements (62) prévus sur ou dans le support (20) pour fixer un corps ou une charge à déplacer linéairement, **caractérisé** par la combinaison des caractéristiques suivantes:
a) le support (20) est une unité composite formée par un corps de base (22) en métal léger, avec au moins un creux longitudinal (28) recevant au moins un arbre (18), et par des paires de barres d'acier (36) contenues avec un ajustement précis dans des canaux longitudinaux (34) ouverts en direction de l'arbre (18),
b) deux paires de barres (36) sont disposées dans des paires de canaux longitudinaux (34) à l'intérieur du corps de base (22), de part et d'autre d'une fente (40), et forment un angle entre elles,
c) deux rangées de billes (38) sont en contact avec les paires de barres (36) et circulent dans des canaux à billes (30) qui se trouvent à l'intérieur du corps de base (22) et qui, tout comme la fente (40), sont ouverts en direction d'un creux longitudinal (28) du corps de base (22), dans lequel au moins un arbre (18) est en contact avec les billes (38),
d) leur jeu de course et leur prétension peuvent être réajustés en modifiant la largeur (b) de la fente (40) au moyen de vis de réglage (46), lesquelles pénètrent dans le corps de base (22), transversalement par rapport à la fente (40),
e) dans le corps de base (22), il y a des canaux de course de retour des billes (32), notamment dans la zone extérieure (26) de part et d'autre de la fente (40).
